# FASCICULE DE BREVET EUROPEEN

(11) **EP 0 814 330 B1**
(45) Date de publication et mention de la délivrance du brevet: **29.10.2003**
(21) Numéro de dépôt: 97401369.0
(22) Date de dépôt: 16.06.1997
(51) Int. Cl.: G01M 7/08

(54) **Dispositif d'auscultation du radier de conduits enterrés**
Auskultationsgerät für die Fundierung von erdverlegten Rohrleitungen
Auscultation device for the foundation of buried pipes

(30) Priorité: 19.06.1996 FR 9607640
(43) Date de publication de la demande: 29.12.1997
(73) Titulaire: Société Anonyme de Gestion des Eaux de Paris S.A.G.E.P., 75675 Paris Cedex 14 (FR)
(72) Inventeur: Thepot, Olivier, 75011 Paris (FR)
(74) Mandataire: Moncheny, Michel

(56) Documents cités:
- EP-A- 0 392 937
- US-A- 3 762 496
- US-A- 5 325 702

## Description

La présente invention se rapporte à un dispositif d'auscultation du radier d'un conduit enterré, notamment d'une canalisation, en vue d'en étudier les caractéristiques physiques, et en particulier la rigidité.

L'analyse des canalisations s'effectue actuellement selon diverses techniques.

Une première technique connue consiste à ausculter un conduit au moyen d'ondes radar. Cette technique permet la détection de vides dans le matériau constitutif du conduit mais est complexe et difficile à mettre en oeuvre lorsqu'un fluide est présent dans la canalisation.

Une autre technique connue consiste à effectuer des carottages pour le prélèvement d'un échantillon en vue de son analyse.

Ces techniques connues présentent de nombreux inconvénients, notamment en raison du fait qu'elles nécessitent la mise en place d'un batardeau pour l'isolation de la partie à traiter.

En outre, la technique du carottage provoque une altération du matériau constitutif du conduit et est donc difficilement applicable au diagnostic d'ouvrages en exploitation.

On a tenté de pallier ces inconvénients en utilisant un dispositif d'auscultation du radier de conduits enterrés, du type comprenant des moyens d'application d'un effort dynamique sur ledit conduit et des moyens de mesure de la déformation résultante dudit radier, destinés à être positionnés par rapport aux moyens d'application d'un effort dynamique et reliés à une unité de traitement de signaux adaptée pour la détermination d'au moins une caractéristique mécanique dudit conduit, à partir de l'effort appliqué par les moyens d'application d'un effort dynamique sur une surface de frappe associée au conduit et de la déformation résultante du radier.

Ces dispositifs d'auscultation sont utilisables en présence d'eau ou de tout autre fluide dans le conduit et permettent une auscultation du type « non destructrice ».

Cependant, les dispositifs d'auscultation de ce type engendrent un choc de très courte durée et ne sont pas adaptés à l'analyse de matériaux composites non homogènes.

Un dispositif d'auscultation est décrit dans le document EP-A-392 937. Par ailleurs, on connaît dans l'état de la technique des dispositifs pour déterminer la capacité de tête de pieu, par exemple du document US-A-5,325,702.

Le but de l'invention est de pallier les inconvénients des techniques d'auscultation connues.

Elle a donc pour objet un dispositif d'auscultation d'un conduit du type précité, caractérisé en ce que les moyens d'application d'un effort dynamique comportent un organe élastiquement déformable de contact avec la surface de frappe et d'augmentation de la durée de contact entre les moyens d'application d'un effort dynamique et ladite surface de frappe, une masse destinée à venir frapper la surface de frappe par gravité et des moyens d'amortissement de l'oscillation de la masse sous l'action de l'organe élastiquement déformable, en ce que la masse est montée coulissante sur une tige de guidage entre une position haute et une position basse d'application d'un effort, et en ce que les moyens d'amortissement comportent au moins un organe débrayable de freinage coopérant avec ladite tige et autobloquant dans le sens ascendant, en considérant le sens du déplacement de la masse.

L'invention peut en outre comporter une ou plusieurs des caractéristiques suivantes :
- chaque organe de freinage comporte un doigt longitudinal monté oscillant sur la masse et muni d'une surface d'extrémité de freinage en regard de la tige de guidage et décalée par rapport à l'axe général dudit doigt ;
- chaque organe de freinage comporte en outre un organe élastique de sollicitation de ladite surface de freinage en appui contre ladite tige de guidage ;
- les moyens d'application d'un effort dynamique comportent un organe débrayable de préhension de la masse relié à des moyens de levage de celle-ci, de ladite position basse vers ladite position haute, et des moyens de désolidarisation dudit organe de préhension et de la masse en position haute ;
- ledit organe de préhension comporte au moins un crochet oscillant et une bride, l'un monté sur la masse et l'autre relié aux moyens de levage, lesdits au moins un crochet délimitant une rampe d'encliquetage dans la bride ;
- lesdits au moins un crochet sont montés oscillants sur un collier relié aux moyens de levage et comportent une butée opposée à ladite rampe d'encliquetage et coopérant avec une collerette ménagée sur ladite tige à un emplacement correspondant à ladite position haute pour la masse en vue du débrayage des moyens de préhension ;
- ladite bride comporte un ensemble de tétons de débrayage desdits au moins un organe de freinage au cours du levage de la masse ;
- ledit organe élastiquement déformable est constitué par un ensemble de ressorts à boudins en saillie à partir de la face d'extrémité active des moyens d'application d'un effort dynamique ;
- les moyens d'application d'un effort dynamique comportent un ensemble d'anneaux massiques modulables montés sur une plaque annulaire de soutien sur laquelle sont montés lesdits moyens d'amortissement ;
- ladite surface de frappe est constituée par un flasque de réception d'impact monté sur une embase destinée à être positionnée contre ledit conduit et montée axialement déplaçable par rapport à ladite tige de guidage ;
- ladite embase comporte une colonne de support dudit flasque reliée à un patin par l'intermédiaire d'au moins un élément élastiquement déformable de filtrage de l'onde de choc engendrée par les moyens d'application d'un effort dynamique ;
- ledit conduit étant constitué par un cuvelage d'une canalisation, ladite tige de guidage est munie de moyens de réglage en longueur en vue de son positionnement selon un diamètre du conduit ;
- les moyens de mesure comportent un interféromètre laser monté sur une canne de longueur réglable en vue de son positionnement selon ledit diamètre du conduit ;
- les moyens d'application d'un effort dynamique, les moyens de mesure de la déformation du radier et l'unité de traitement de signaux sont montés sur un chariot à roues muni d'une potence équipée d'un treuil de levage de la masse ; et
- le chariot comporte des moyens de stabilisation destinés à être positionnés entre deux surfaces sensiblement verticales et mutuellement opposées du conduit.

D'autres caractéristiques et avantages de l'invention ressortiront de la description suivante, donnée à titre d'exemple et sans caractère limitatif, en regard des dessins annexés sur lesquels :
- la figure 1 représente une vue en perspective d'un dispositif d'auscultation selon l'invention utilisé pour l'auscultation d'un cuvelage d'une canalisation ;
- la figure 2 est une vue éclatée d'une partie des moyens d'application d'un effort dynamique du dispositif de la figure 1;
- la figure 3 est une vue en perspective d'une partie des moyens d'application d'un effort dynamique du dispositif d'auscultation de la figure 1, avec une portion évidée ; et
- la figure 4 est une vue en coupe longitudinale de l'extrémité inférieure de la tige de guidage, et de l'embase.

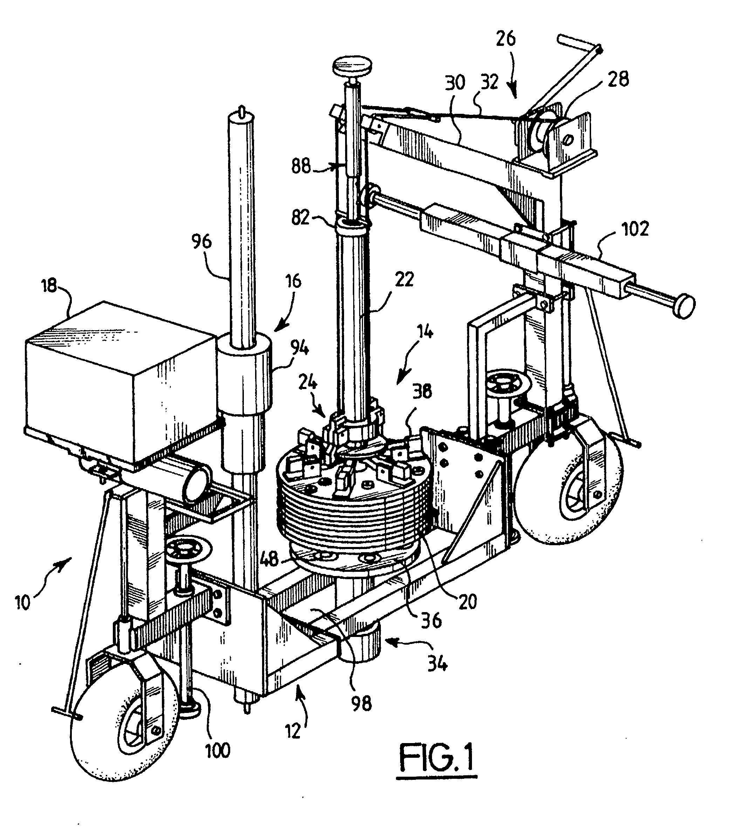

Sur la figure 1 on a représenté en perspective un dispositif d'auscultation d'un conduit, désigné par la référence numérique 10.

Ce dispositif est destiné à l'auscultation du radier du conduit (non représenté), c'est-à-dire la partie inférieure du conduit ainsi que son assise, en vue d'en déterminer au moins une caractéristique physique intrinsèque, notamment sa rigidité.

Le dispositif d'auscultation 10 comporte, montés sur un chariot 12, des moyens 14 d'application d'un effort dynamique sur la paroi du cuvelage du conduit et des moyens de mesure 16 de la déformation résultante du radier, positionnés à distance des moyens 14 d'application d'un effort dynamique et reliés à une unité de traitement de signaux 18 assurant l'acquisition des données de mesure fournies par les moyens de mesure 16 et le calcul de la rigidité du cuvelage à partir du déplacement de la paroi du cuvelage et de l'effort appliqué par les moyens 14 d'application d'un effort dynamique.

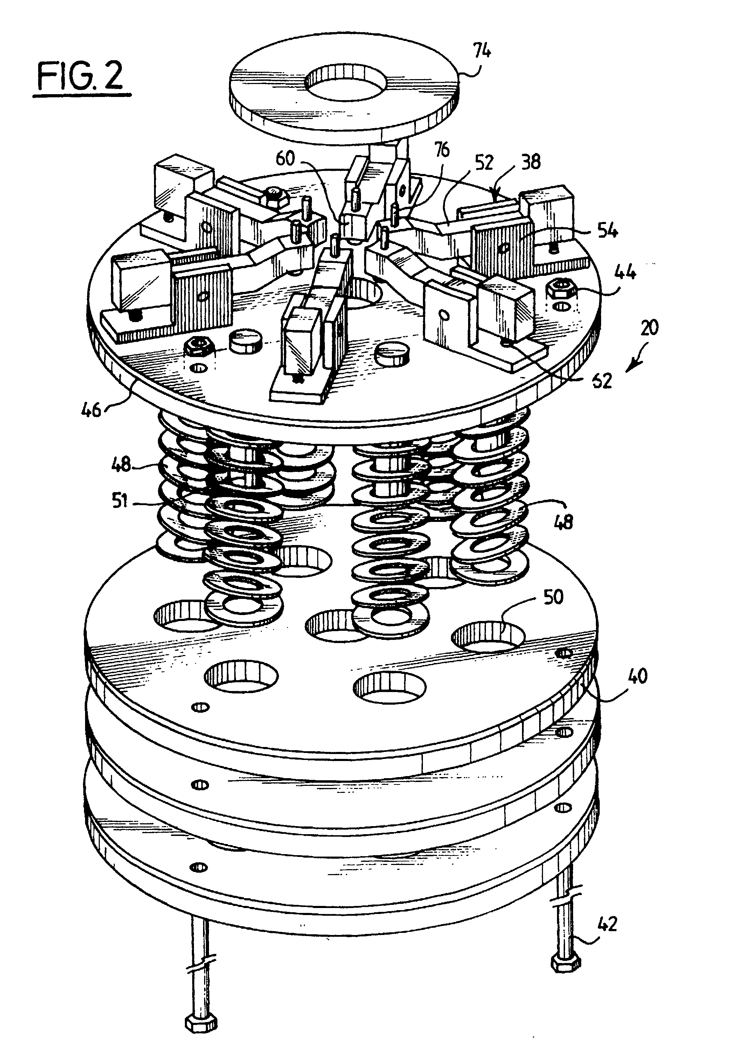

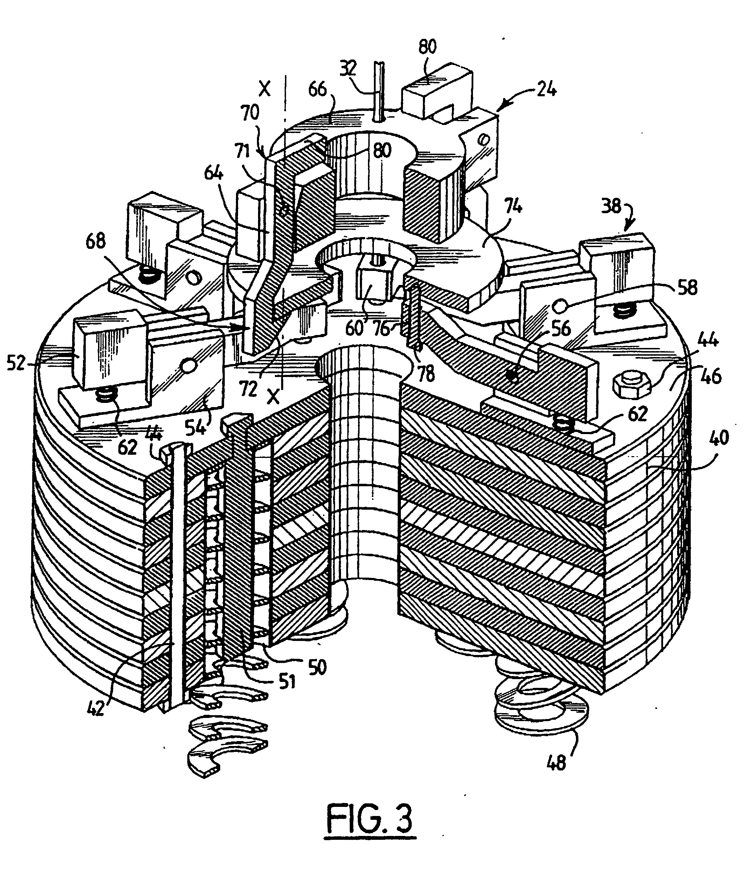

En se référant également aux figures 2 et 3, les moyens d'application d'un effort dynamique comportent une masse 20, montée coulissante sur une tige de guidage 22 entre une position haute et une position basse d'application d'un effort dynamique représentée sur la figure 1, des moyens de préhension de la masse 24 reliés à des moyens de levage 26 de celle-ci en vue de son levage de la position basse vers la position haute.

On voit sur la figure 1 que les moyens de levage 26 sont constitués par un treuil 28 monté sur une potence 30 du chariot 12 et sur lequel s'enroule un câble 32 à l'extrémité duquel sont montés les moyens de préhension 24.

Par ailleurs, les moyens 14 d'application d'un effort dynamique comportent une embase 34 est constituée par une colonne supportant un flasque 36 délimitant une surface de frappe sur laquelle est appliqué le choc engendré par la masse 20 au cours de l'application d'un effort.

En outre, la masse 20 comporte un organe élastiquement déformable équipant la face d'extrémité active de la masse 20 et assurant l'augmentation de la durée de contact entre la masse 20 et le flasque 36.

Les moyens 14 d'application d'un effort dynamique sont complétés par des moyens d'amortissement de l'oscillation de la masse 20 engendrée par l'organe élastiquement déformable, désignés par la référence numérique 38.

La description précise des moyens d'application d'un effort dynamique va maintenant être faite en référence aux figures 2 à 4.

En se référant tout d'abord aux figures 2 et 3, on voit que la masse 20 est constituée par l'assemblage d'un ensemble d'anneaux massiques, tels que 40, fixés à l'aide d'un ensemble de tiges filetées 42 et d'écrous 44 sur une plaque annulaire de support 46 sur laquelle sont montés les moyens d'amortissement 38.

Par exemple, la masse est constituée par l'assemblage de neuf disques d'environ 350 mm de diamètre et d'environ 15 mm d'épaisseur, procurant à la masse un poids total de l'ordre de 100 kg. Sur la figure 2, seuls quelques disques ont été représentés pour clarifier la figure.

Comme mentionné précédemment, la masse est équipée d'un organe élastiquement déformable assurant l'augmentation de la durée de contact entre la masse 20 et le flasque 36.

On voit sur les figures 2 et 3 que cet organe élastiquement déformable est constitué par un ensemble de six ressorts à boudins, tel que 48, régulièrement répartis et en saillie au-delà de la face d'extrémité active de la masse 20.

Pour ce faire, chaque disque 40 est percé d'un ensemble de six orifices coaxiaux, tel que 50, dans lesquels se logent les ressorts 48.

En outre, une queue 51 de guidage et de centrage des ressorts 48 est montée dans chaque passage délimité par les orifices 50 coaxiaux.

Comme mentionné précédemment, la masse est équipée de moyens d'amortissement 38 destinés à limiter le rebond de la masse engendrée par les ressorts 48.

Ces moyens d'amortissement sont constitués par un ensemble de six doigts, tels que 52, montés chacun oscillant sur un sabot 54 solidaire de la face d'extrémité supérieure de la plaque de support 46.

Chaque doigt 52 a une forme longitudinale et est percé, au voisinage de son centre de gravité, d'un orifice transversal 56 recevant un axe d'oscillation 58 correspondant.

Par ailleurs, chaque doigt 52 comporte une surface d'extrémité de freinage concave 60 placée en regard de la tige de guidage 22, de même rayon de courbure que celle-ci, et décalée par rapport à leur axe longitudinal.

Par ailleurs, un ressort 62 est interposé entre l'extrémité de chaque doigt 52, opposée à la surface de freinage 60 et le sabot 54, en vue d'appliquer légèrement la surface de freinage 60 contre la tige de guidage 22.

Les moyens de préhension 24 de la masse vont maintenant être décrits en référence aux figures 1 et 3.

On voit sur ces figures que ces moyens de préhension 24 sont constitués par deux crochets 64 symétriques montés oscillants sur un collier 66 monté à coulissement sur la tige de guidage 22 et relié aux moyens de levage 26, et en particulier solidaire du câble 32.

Chaque crochet 64 a une forme générale longitudinale d'axe X-X parallèle à celui de la tige de guidage 22 et comporte une première extrémité 68 en regard de la masse 20 délimitant le crochet proprement dit et décalée de façon radialement externe de l'axe X-X et une deuxième extrémité opposée 70 décalée de l'axe X-X de façon radialement interne.

Par ailleurs, chaque crochet 64 est percé d'un orifice 71 en vue de sa fixation oscillante sur le collier 66, cet orifice étant décalé du centre de gravité du crochet en direction de la deuxième extrémité 70 de sorte que l'axe générale X-X du crochet soit dans une position sensiblement verticale au repos.

Par ailleurs, la première extrémité 68 de chaque crochet placée en regard de la masse 20 comporte une rampe interne 72 d'encliquetage dans une bride 74 montée sur la masse 20.

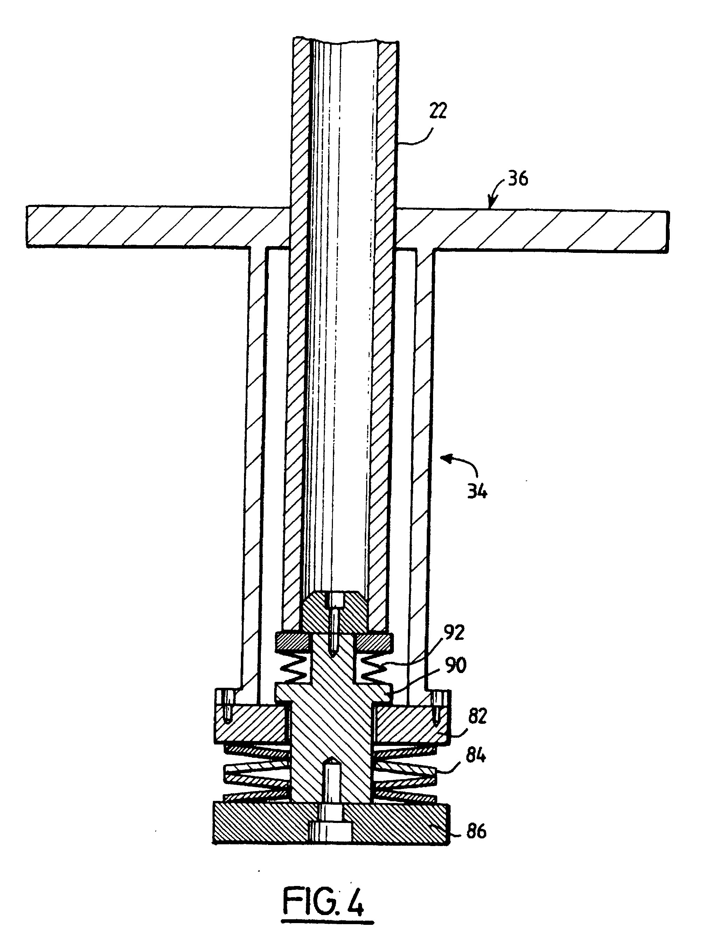

On voit sur les figures 3 et 4 que la bride 74 a une forme annulaire coaxiale à la tige de guidage 22 et comporte, fixés sur sa face d'extrémité inférieure, un ensemble de tétons 76 s'étendant parallèlement à la tige de guidage 22 et montés chacun à coulissement dans un orifice correspondant ménagé dans chaque doigt 52 à un emplacement intermédiaire entre la surface de freinage 60 et l'axe d'oscillation 58.

On voit en particulier sur la figure 3 que chaque téton 76 comporte, au voisinage de son extrémité libre une tête 78 délimitant une butée de commande du débrayage des moyens d'amortissement 38.

Par ailleurs, la deuxième extrémité 70 des crochets 64, opposée aux crochets proprement dits 68, comporte une surface d'extrémité 80 délimitant une butée coopérant avec une collerette 82 ménagée sur la tige de guidage 22 (figure 1), à un emplacement correspondant à la position haute de la masse 20, en vue du débrayage des moyens de préhension 24.

Comme mentionné précédemment, la surface de frappe pour les moyens 14 d'application d'un effort dynamique est constituée par un flasque 36 solidaire d'une embase 34 montée coulissante sur la tige 22.

En se référant à la figure 4, on voit que l'embase 34 a une forme générale cylindrique. Elle est fixée par son extrémité inférieure, opposée au flasque 36, sur une semelle 82 qui repose, par l'intermédiaire d'un ressort 84 de filtration des ondes de choc engendrées par les moyens d'application d'un effort dynamique, sur un patin 86 en appui sur la paroi du cuvelage (non représenté).

En se référant également à la figure 1, on voit que la tige de guidage 22 est munie de moyens de réglage en longueur 88 de type classique, ménagés au voisinage de son extrémité supérieure.

Elle est emmanchée à coulissement, par son extrémité inférieure, sur un pied 90 solidaire du patin 86 en contact avec la paroi du cuvelage ou du radier.

Par ailleurs, un ressort 92 est interposé entre le pied 90 et l'extrémité inférieure de la tige de guidage 22 en vue d'assurer un positionnement et un maintien de la tige de guidage 22 contre la paroi du cuvelage, selon un diamètre de ce dernier.

On voit également sur la figure 1 que les moyens de mesure de déformation du radier sont positionnés à distance des moyens d'application d'un effort dynamique.

Ils sont par exemple positionnés entre environ 30 cm et 50 cm des moyens d'application d'un effort dynamique, de préférence environ 35 cm.

Ces moyens 16 de mesure de déformation du radier sont constitués par un interféromètre laser 94 monté sur une canne 96 de longueur réglable et destinée à être positionnée par ses deux extrémités contre la paroi du cuvelage, en deux emplacements symétriques, parallèlement à la tige de guidage 22.

L'interféromètre laser 94 est un interféromètre de type classique et ne sera donc pas décrit en détail par la suite. Il fournit, comme mentionné précédemment, une mesure de la déformation de la paroi du cuvelage engendrée par les moyens d'application d'un effort dynamique et fournit les données de mesure à l'unité de traitement de signaux 18 en vue de la détermination de la raideur du cuvelage en calculant le rapport entre la force appliquée par les moyens d'application d'un effort dynamique et le déplacement résultant du cuvelage, à l'aide d'un algorithme de calcul approprié.

Par ailleurs, le chariot 12 représenté sur la figure 1 est constitué par un chariot muni de deux roues, entièrement démontable et remontable à l'intérieur du conduit. Il est constitué d'un châssis supportant la potence 30 mentionnée précédemment, l'unité de traitement de signaux 18, les moyens 14 d'application d'un effort dynamique et les moyens de mesure 16 de la déformation du cuvelage.

On voit sur cette figure 1 que le châssis du chariot 12 comporte un évidement central 98 permettant le passage de la canne 96 et de l'embase 34.

Il comporte en outre deux vérins, tels que 100, sur lesquels repose le chariot en fonctionnement, ainsi qu'un bras de stabilisation 102 de longueur réglable, muni par exemple au voisinage de ses deux zones d'extrémité opposées de roues (non représentées), s'appuyant contre la paroi du cuvelage.

Ce chariot est complété par une cale amovible, non représentée, assurant le soutien de l'embase 34 au cours du déplacement du chariot.

Pour l'auscultation d'un conduit, le chariot est amené jusqu'à un emplacement de mesure prédéterminé.

Après stabilisation du chariot et fixation de la tige de guidage 22 et de la canne 96 contre la paroi du cuvelage, le dispositif d'auscultation qui vient d'être décrit s'utilise, à partir d'une position initiale au repos dans laquelle la masse se situe en appui contre le flasque de réception d'impact 36, en déroulant le câble 32 à l'aide du treuil 28 de manière à amener les crochets 64 (figures 2 et 3) en contact avec la bride 74. Ces crochets s'encliquettent alors dans cette bride, par l'intermédiaire de la rampe d'encliquetage 72.

La masse est levée à l'aide du treuil 28 de la position basse vers la position haute. Il est à noter qu'au cours de ce mouvement les tétons 76 exercent une action sur les doigts 52 à l'encontre des ressorts 62 de sollicitation débrayant ainsi les moyens d'amortissement de l'oscillation en libérant le contact entre les surfaces de freinage 60 et la tige de guidage 22.

Lorsque la masse atteint la position haute, la collerette 82 agit sur la butée des crochets 64 et provoque ainsi une rotation de ces crochets 64 engendrant ainsi une libération de la masse qui vient alors frapper le flasque 36.

L'onde de choc ainsi engendrée se propage le long de l'embase 34 et dans la paroi du cuvelage. La déformation résultante est détectée par les moyens de mesure 16 permettant ainsi, comme mentionné précédemment, la mesure de la raideur du cuvelage.

Il est à noter que l'application de l'effort dynamique s'effectue par l'intermédiaire de l'organe élastiquement déformable constitué par l'ensemble de ressorts 48 qui se déforme, augmentant ainsi la durée de contact entre la masse 20 et l'embase 34.

On notera que l'effort maximal appliqué par les moyens d'application d'un effort dynamique est de l'ordre de deux tonnes et la durée de choc est de l'ordre de 50 millisecondes, ce qui permet l'auscultation de tous types de matériaux composites non homogènes tels qu'un béton cyclopéen.

On conçoit par ailleurs que de par la construction du dispositif d'auscultation, l'effort appliqué par la masse 20 sur le flasque est précisément déterminable, en raison de la connaissance précise du poids de la masse, de la hauteur à partir de laquelle cette masse est lâchée et de la raideur des ressorts.

Ainsi, il n'est pas nécessaire de mesurer cet effort, seule la mesure de la valeur de la déformation de radier étant ainsi nécessaire à la détermination de la raideur.

## Revendications

1. Dispositif d'auscultation du radier de conduits enterrés, comprenant des moyens (14) d'application d'un effort dynamique sur ledit conduit à ausculter et des moyens de mesure (16) de la déformation résultante du radier, destinés à être positionnés par rapport aux moyens (14) d'application d'un effort dynamique et reliés à une unité de traitement de signaux (18) adaptée pour la détermination d'au moins une caractéristique mécanique dudit conduit, à partir de l'effort appliqué par les moyens (14) d'application d'un effort dynamique sur une surface de frappe (36) associée au conduit et de la déformation résultante du radier, **caractérisé en ce que** les moyens (14) d'application d'un effort dynamique comportent un organe élastiquement déformable (48) de contact avec la surface de frappe (36) et d'augmentation de la durée de contact entre les moyens (14) d'application d'un effort dynamique et ladite surface de frappe (36), une masse (20) destinée à venir frapper la surface de frappe (36) par gravité et des moyens d'amortissement (38) de l'oscillation de la masse (20) sous l'action de l'organe élastiquement déformable (48), **en ce que** la masse (20) est montée coulissante sur une tige de guidage (22) entre une position haute et une position basse d'application d'un effort, et **en ce que** les moyens d'amortissement comportent au moins un organe (38) débrayable de freinage coopérant avec ladite tige (22) et autobloquant dans le sens ascendant, en considérant le sens du déplacement de la masse (20).

2. Dispositif d'auscultation selon la revendication 1, **caractérisé en ce que** chaque organe de freinage (38) comporte un doigt longitudinal (52) monté oscillant sur la masse (20) et muni d'une surface d'extrémité de freinage (60) en regard de la tige de guidage (22) et décalée par rapport à l'axe général dudit doigt (52).

3. Dispositif d'auscultation selon la revendication 2, **caractérisé en ce que** chaque organe de freinage (38) comporte en outre un organe élastique (62) de sollicitation de ladite surface de freinage (60) en appui contre ladite tige de guidage (22).

4. Dispositif d'auscultation selon l'une quelconque des revendications 1 à 3, **caractérisé en ce que** les moyens (14) d'application d'un effort dynamique comportent un organe débrayable de préhension (24) de la masse (20) relié à des moyens de levage (26) de celle-ci de ladite position basse vers ladite position haute et des moyens de désolidarisation (80,82) dudit organe de préhension (24) et de la masse (20) en position haute.

5. Dispositif d'auscultation selon la revendication 4, **caractérisé en ce que** ledit organe de préhension (24) comporte au moins un crochet (64) oscillant et une bride (74), l'un monté sur la masse (20) et l'autre relié aux moyens de levage (26), lesdits au moins un crochet (64) délimitant une rampe d'encliquetage (72) dans la bride (74).

6. Dispositif d'auscultation selon la revendication 5, **caractérisé en ce que** lesdits au moins un crochet (64) sont montés oscillants sur un collier (66) relié aux moyens de levage (26) et comportent une butée (80) opposée à ladite rampe d'encliquetage (72) et coopérant avec une collerette (82) ménagée sur ladite tige (22) à un emplacement correspondant à ladite position haute pour la masse (20) en vue du débrayage des moyens de préhension (24).

7. Dispositif d'auscultation selon la revendication 6, **caractérisé en ce que** ladite bride (74) comporte un ensemble de tétons (76) de débrayage desdits au moins un organe de freinage (38) au cours du levage de la masse (20).

8. Dispositif d'auscultation selon l'une quelconque des revendications 1 à 7, **caractérisé en ce que** ledit organe élastiquement déformable est constitué par un ensemble de ressorts (48) à boudins en saillie à partir de la face d'extrémité active des moyens (14) d'application d'un effort dynamique.

9. Dispositif d'auscultation selon l'une quelconque des revendications 1 à 8, **caractérisé en ce que** les moyens (14) d'application d'un effort dynamique comportent un ensemble d'anneaux massiques (40) modulables montés sur une plaque annulaire (46) de soutien sur laquelle sont montés lesdits moyens d'amortissement (38).

10. Dispositif d'auscultation selon l'une quelconque des revendications 1 à 9, **caractérisé en ce que** ladite surface de frappe est constituée par un flasque (36) de réception d'impact solidaire d'une embase (34) destinée à être positionnée contre ledit conduit et montée axialement déplaçable par rapport à ladite tige de guidage (22).

11. Dispositif d'auscultation selon la revendication 10, **caractérisé en ce que** ladite embase (34) comporte une colonne de support dudit flasque (36) reliée à un patin (86) par l'intermédiaire d'au moins un élément élastiquement déformable (84) de filtrage de l'onde de choc engendrée par les moyens (14) d'application d'un effort dynamique.

12. Dispositif d'auscultation selon l'une quelconque des revendications 1 à 11, **caractérisé en ce que** ledit conduit étant constitué par un cuvelage d'une canalisation, ladite tige de guidage (22) est munie de moyens de réglage en longueur (88) en vue de son positionnement selon un diamètre du conduit.

13. Dispositif d'auscultation selon la revendication 12, **caractérisé en ce que** les moyens de mesure de la déformation du cuvelage comportent un interféromètre laser (94) monté sur une canne (96) de longueur réglable en vue de son positionnement selon ledit diamètre du conduit.

14. Dispositif d'auscultation selon l'une quelconque des revendications 1 à 13, **caractérisé en ce que** les moyens (14) d'application d'un effort, les moyens de mesure (16) de la déformation résultante de l'élément de paroi et l'unité de traitement de signaux (18) sont montés sur un chariot (12) à roues muni d'une potence (30) équipée d'un treuil (28) de levage de la masse.

15. Dispositif d'auscultation selon la revendication 14, **caractérisé en ce que** le chariot (12) comporte des moyens de stabilisation (102) destinés à s'appliquer entre deux surfaces sensiblement verticales et mutuellement opposées du conduit.

## Patentansprüche

1. Untersuchungsvorrichtung für die Fundierung von erdverlegten Rohrleitungen, die Beaufschlagungsmittel (14) mit dynamischer Beanspruchung auf die zu untersuchende besagte Rohrleitung und Mittel (16) zur Messung der resultierenden Verformung der Fundierung aufweist, wobei die Messungsmittel (16) dazu bestimmt sind, in Bezug auf die Beaufschlagungsmittel (14) mit dynamischer Beanspruchung positioniert und mit einer Signalverarbeitungseinheit (18) verbunden zu werden, die dazu geeignet ist, mindestens ein mechanisches Kennzeichen der besagten Rohrleitung aus auf eine der Rohrleitung zugeordnete Schlagoberfläche (36) ausgeübten Beanspruchung durch die Beaufschlagungsmittel (14) mit dynamischer Beanspruchung und aus der sich daraus ergebenden Verformung der Fundierung zu bestimmen,
**dadurch gekennzeichnet,**
**dass** die Beaufschlagungsmittelmittel (14) mit einer dynamischen Beanspruchung folgendes aufweisen:
- ein elastisches verformbares Organ (48) zum Kontakt mit der Schlagoberfläche (36) und zur Erhöhung der Kontaktdauer zwischen den Beaufschlagungsmitteln (14) mit dynamischer Beanspruchung und der besagten Schlagoberfläche (36),
- eine Masse (20) die dazu bestimmt ist, durch Schwerkraft auf die Schlagoberfläche (36) zu schlagen
- und unter der Einwirkung des elastisch verformbaren Organs stehende Mittel (38) zur Dämpfung der Schwingung der Masse (20),
**dass** die Masse (20) gleitend auf einem Führungsstab (22) zwischen einer oberen und unteren Beanspruchungsbeaufschlagung montiert ist, und
**dass** die Dämpfungsmittel mindestens ein ausschaltbares, mit dem besagten Stab (22) zusammenwirkendes und in Bezug auf die Bewegungsrichtung der Masse (20) in aufsteigender Richtung selbstblockierendes Bremsorgan (38) aufweisen.

2. Untersuchungsvorrichtung nach Anspruch 1,
**dadurch gekennzeichnet,**
**dass** jedes Bremsorgan (38) einen schwingend auf der Masse (20) montierten und einen dem Führungsstab (22) gegenüberliegenden und mit einer in Bezug auf die Hauptachse des besagten Fingers (52) versetzten Bremsendfläche versehenen Längsfinger (52) aufweist.

3. Untersuchungsvorrichtung nach Anspruch 2,
**dadurch gekennzeichnet,**
**dass** jedes Bremsorgan (38) außerdem ein elastisches Beanspruchungsorgan (62) der besagten, sich auf dem besagten Führungsstab (22) aufstützenden Bremsfläche (60) aufweist.

4. Untersuchungsvorrichtung nach Irgendeinem der Ansprüche 1 bis 3,
**dadurch gekennzeichnet,**
**dass** die Beaufschlagungsmittel (14) durch dynamische Beanspruchung ein ausschaltbares Greiforgan, welches mit Hubmitteln (26) für die Masse aus der besagten unteren Lage in die besagte obere Lage verbunden ist, und Mittel (80, 82) zur Trennung des besagten Greiforgans (24) und der Masse (20) in oberer Lage aufweisen.

5. Untersuchungsvorrichtung nach Anspruch 4,
**dadurch gekennzeichnet,**
**dass** das besagte Greiforgan (24) mindestens einen schwingenden Haken (64) und einen Flansch (74) aufweist, wobei der eine auf der Masse (20) montiert und der andere mit den Hubmitteln (26) verbunden ist und mindestens der eine Haken (64) eine Einschnapprampe (72) In dem Flansch (74) abgrenzt.

6. Untersuchungsvorrichtung nach Anspruch 5,
**dadurch gekennzeichnet,**
**dass** der mindestens eine Hake (64) schwingend auf einem mit den Hubmitteln (26) verbundenen Kragen (66) montiert ist und einen der Einschnapprampe (72) gegenüberliegenden und mit einer auf dem besagten Stab (22) an einem der besagten oberen Position für die Masse (20) zum Ausschalten der Greifmittel (24) bestimmten entsprechenden Ort angeordneten Kragen (82) zusammenwirkenden Anschlag (80) aufweist.

7. Untersuchungsvorrichtung nach Anspruch 6,
**dadurch gekennzeichnet,**
**dass** der besagte Flansch (74) eine Reihe von Auskupplungswarzen (76) des besagten mindestens einen Bremsorgans (38) während des Anhebens der Masse (20) aufweist.

8. Untersuchungsvorrichtung nach irgendeinem der Ansprüche 1 bis 7, **dadurch gekennzeichnet,**
**dass** das besagte elastisch verformbare Organ aus einem Ensemble von aus der aktiven Endseite der Beaufschlagungsmittel (14) mit einer dynamischen Beanspruchung herausragenden Sprungfedern (48) besteht.

9. Untersuchungsvorrichtung nach irgendeinem der Ansprüche 1 bis 8,
**dadurch gekennzeichnet,**
**dass** die Mittel (14) zur Beaufschlagung durch eine dynamische Beanspruchung ein Ensemble von modulierbaren, auf einer ringformigen Stützplatte (46) montierter Massenringe (40) aufweist, wobei auf der besagten Platte die besagten Dämpfungsmittel (38) montiert sind.

10. Untersuchungsvorrichtung nach irgendeinem der Ansprüche 1 bis 9,
**dadurch gekennzeichnet,**
**dass** die besagte Schlagoberfläche aus einem Flansch (36) zur Aufnahme von Stößen besteht, der mit einem, zur Positionierung gegen die besagte Rohrleitung bestimmten und in Bezug auf den besagten Führungsstab (22) axial verschiebbaren Ansatz (34) einstückig ist.

11. Untersuchungsvorrichtung nach Anspruch 10,
**dadurch gekennzeichnet,**
**dass** der besagte Ansatz (34) eine Trägersäule des besagten Flansches (36) aufweist, die über mindestens ein verformbares elastisches Element (84) zur Filterung der durch die Beaufschlagungsmittel (14) durch dynamische Beanspruchung erzeugte Stoßwelle mit einem Schuh (86) verbunden ist.

12. Untersuchungsvorrichtung nach irgendeinem der Ansprüche 1 bis 11,
**dadurch gekennzeichnet,**
**dass** die besagte Rohrleitung aus einer Kanalisierungsausschachtung besteht, wobei der besagte Führungsstab (22) mit Längeneinstellmitteln (88) zu seiner Positionierung entsprechend dem Rohrleitungsdurchmesser versehen ist.

13. Untersuchungsvorrichtung nach Anspruch 12,
**dadurch gekennzeichnet,**
**dass** die Mittel zur Messung der Verformung der Ausschachtung ein auf einem Stab (96) mit einstellbarer Länge zu seiner Positionierung entsprechend dem Durchmesser der Rohrleitung montiertes Laserinterferometer (94) aufweisen.

14. Untersuchungsvorrichtung nach irgendeinem der Ansprüche 1 bis 13,
**dadurch gekennzeichnet,**
**dass** die Mittel (14) zur Beaufschlagung durch eine Beanspruchung, die Mittel (16) zum Messen der sich ergebenden Verformung des Wandelements und die Signalverarbeitungseinheit (18) auf einem mit einer mit einem Massenhubwerk (28) ausgerüsteten Tragsäule (30) versehenen Fahrgestell (12) mit Rädern montiert sind.

15. Untersuchungsvorrichtung nach Anspruch 14,
**dadurch gekennzeichnet,**
**dass** das Fahrgestell (12) Stabilierungsmittel (102) aufweist, die dazu bestimmt sind , sich, zwischen zwei im wesentlichen vertikalen , einander gegenüberliegenden Flächen, der Rohrleitung anzupassen.

## Claims

1. A sounding device for the invert of buried ducts, comprising means (14) for applying a dynamic force to the said duct to be sounded and measuring means (16) for the resultant deformation of the invert, adapted to be positioned in relation to the means (14) for applying a dynamic force and connected to a signal processing unit (18) adapted to determine at least one mechanical characteristic of the said duct from the force applied by the means (14) for application of a dynamic force to an impact surface (36) associated with the duct and from the resultant deformation of the invert, **characterized in that** the means (14) for applying a dynamic force comprise an elastically deformable element (48) for contact with the impact surface (36) and for increasing the duration of contact between the means (14) for applying a dynamic force and the said impact surface (36), a mass (20) adapted to strike the impact surface (36) through gravity and damping means (38) for the oscillation of the mass (20) under the action of the elastically deformable element (48), and **in that** the mass (20) is slidably mounted on a guide rod (22) between a high position and a low position of application of a force, and **in that** the damping means comprise at least one disengageable braking member (38) cooperating with the said rod (22) and self-engaging in the rising sense, as related to the sense of movement of the mass (20).

2. A sounding device according to claim 1, **characterized in that** each braking member (38) comprises a longitudinal finger (52) mounted to oscillate on the mass (20) and provided with an end braking surface (60) facing the guide rod (22) and offset relative to the general axis of the said finger (52).

3. A sounding device according to claim 2, **characterized in that** each braking member (38) further comprises an elastic member (62) biasing the said braking surface (60) into contact with the said guide rod (22).

4. A sounding device according to any of claims 1 to 3, **characterized in that** the means (14) for applying a dynamic force comprise a disengageable gripping member (24) of the mass (20) connected to raising means (26) for this from the said low position towards the said high position and means for uncoupling (80, 82) the said gripping member (24) and the mass (20) in the high position.

5. A sounding device according to claim 4, **characterized in that** the said gripping member (24) comprises at least one oscillating hook (64) and a flange (74), one mounted on the mass (20) and the other connected to the raising means (26), the said at least one hook (64) delimiting a ramp (74) for latching in the flange (74).

6. A sounding device according to claim 5, **characterized in that** the said at least one hook (64) is mounted to oscillate on a collar (66) connected to the raising means (26) and comprises an abutment (80) opposed to the said latching ramp (72) and cooperating with a collar (82) formed on the said rod (22) at a location corresponding to the said high position for the mass (20), in order to disengage the gripping means (24).

7. A sounding device according to claim 6, **characterized in that** the said flange (74) comprises a set of dogs (76) for disengaging the said at least one braking member (38) in the course of raising the mass (20).

8. A sounding device according to any of claims 1 to 7, **characterized in that** the said elastically deformable element is formed by a set of helical springs (48) projecting from the active end face of the means (14) for applying a dynamic force.

9. A sounding device according to any of claims 1 to 8, **characterized in that** the means (14) for applying a dynamic force comprise a set of annular weights (40) mounted in modular manner on an annular supporting plate (46) on which are mounted the said damping means (38).

10. A sounding device according to any of claims 1 to 9, **characterized in that** the said impact surface is formed by is formed by a flange (36) for reception of the impact integral with a base part (34) adapted to be positioned against the said duct and mounted axially movable relative to the said guide rod (22).

11. A sounding device according to claim 10, **characterized in that** the said base part (34) comprises a supporting column for the said flange (36) connected to a base plate (86) through at least one elastically deformable element (84) for filtering the shock wave created by the means (14) for applying a dynamic force.

12. A sounding device according to any of claims 1 to 11, **characterized in that**, the said duct being formed by a lining of a channel, the said guide rod (22) is provided with means for regulating the length (88) to set it in accordance with a diameter of the duct.

13. A sounding device according to claim 12, **characterized in that** the means for measuring the deformation of the lining comprise a laser interferometer (94) mounted on a rod (96) of adjustable length for setting it in accordance with the said diameter of the duct.

14. A sounding device according to any of claims 1 to 13, **characterized in that** the means (14) for applying a dynamic force, the measuring means (16) of the resulting deformation of the wall element and the signal processing unit (18) are mounted on a wheeled carriage (12) provided with a jib (30) fitted with a windlass (28) for raising the mass.

15. A sounding device according to claim 14, **characterized in that** the carriage (12) comprises stabilising means (102) adapted to be applied between two substantially vertical, mutually opposed surfaces of the duct.
